# EUROPÄISCHE PATENTANMELDUNG

(11) **EP 1 087 003 A2**
(43) Veröffentlichungstag der Anmeldung: **28.03.2001**
(21) Anmeldenummer: 00119968.6
(22) Anmeldetag: 14.09.2000
(51) Int. Cl.: C09K 5/06

(54) **Salzgemische zur Speicherung von Wärmeenergie in Forum von Phasenumwandlungswärme und ihre Anwendung**

(30) Priorität: 25.09.1999 DE 19946065
(71) Anmelder: MERCK PATENT GmbH, 64293 Darmstadt (DE)
(72) Erfinder: Lotz, Natascha, 64390 Erzhausen (DE); Neuschütz, Mark Dr., 64295 Darmstadt (DE)

(57) **Zusammenfassung**

Die Erfindung betrifft Salzgemische zur Speicherung von Wärmeenergie in Form von Phasenumwandlungswärme und deren Verwendung.

## Beschreibung

Die Erfindung betrifft Salzgemische zur Speicherung von Wärmeenergie in Form von Phasenumwandlungswärme und deren Verwendung.

In technischen Prozessen müssen oft Wärmespitzen oder ―defizite vermieden werden. Üblicherweise werden dazu Wärmeaustauscher verwendet. Sie enthalten Wärmeübertragungsmittel die Wärme von einem Ort oder Medium zu einem anderen transportieren. Um Wärmespitzen abzuführen wird z.B. die Abgabe der Wärme über einen Wärmetauscher an die Luft genutzt. Diese Wärme steht dann allerdings nicht mehr zum Ausgleich von Wärmedefiziten zur Verfügung. Dieses Problem löst der Einsatz von Wärmespeichern.

Als Speichermedien eignen sich z.B. Wasser oder Steine/Beton um fühlbare ("sensible") Wärme zu speichern oder Phasenwechselmaterialien (Phase Change Materials, PCM) wie Salze, Salzhydrate oder deren Gemische um Wärme in Form von Schmelzwärme ("latenter" Wärme) zu speichern.

Es ist bekannt, daß beim Schmelzen einer Substanz, d.h. beim Übergang von der festen in die flüssige Phase, Wärme verbraucht, d.h. aufgenommen wird, die, solange der flüssige Zustand bestehen bleibt, latent gespeichert wird, und daß diese latente Wärme beim Erstarren, d.h. beim Übergang von der flüssigen in die feste Phase, wieder frei wird.

Grundsätzlich ist für das Laden eines Wärmespeichers eine höhere Temperatur erforderlich als beim Entladen erhalten werden kann, da für den Transport/Fluß von Wärme eine Temperaturdifferenz erforderlich ist. Die Qualität der Wärme ist dabei von der Temperatur, bei der sie zur Verfügung steht, abhängig: Je höher die Temperatur ist, desto vielseitiger kann die Wärme eingesetzt werden. Aus diesem Grund ist es erstrebenswert, daß das Temperaturniveau bei der Speicherung so wenig wie möglich absinkt.

Bei sensibler Wärmespeicherung (z.B. durch Erhitzen von Wasser) ist mit dem Eintrag von Wärme eine stetige Erhitzung des Speichermaterials verbunden (und umgekehrt beim Entladen), während latente Wärme bei der Schmelztemperatur des PCM gespeichert und entladen wird. Latente Wärmespeicherung hat daher gegenüber sensibler Wärmespeicherung den Vorteil, daß sich der Temperaturverlust auf den Verlust beim Wärmetransport vom und zum Speicher beschränkt.

Um Latentwärmespeicher optimal auf den jeweiligen Einsatz abstimmen zu können, ist es erforderlich, über Speichermaterialien zu verfügen, die neben der richtigen Schmelztemperatur zahlreiche weitere Kriterien erfüllen. Dazu gehören eine möglichst große Schmelzenthalpie und Wärmekapazität, geringer Dampfdruck, chemische und physikalische Stabilität, geringe Korrosivität, reproduzierbarer Phasenübergang, kongruentes Schmelzverhalten, geringe Unterkühlung, geringe Volumenänderung, hohe Wärmeleitfähigkeit, toxikologische Unbedenklichkeit, Rezyklierbarkeit und ein geringer Preis (J. Schröder, Energy Research, 1981, 103-109). Aus diesem Grund sind nur sehr wenige technisch einsetzbare Speichermaterialien bekannt. Für die meisten Temperaturen stehen noch keine geeigneten Materialien zur Verfügung.

Mit speziellen Salzgemischen werden Speichermedien für ganz definierte Temperaturen angeboten.

In US 5728316 werden Salzgemische auf Basis von Magnesiumnitrat und Lithiumnitrat zur Speicherung und Nutzung von Wärmeenergie verwendet, die mit einer Schmelztemperatur von 75,6°C optimal für die Anwendung in Latentwärmespeichern für den Einsatz in Kraftfahrzeugen geeignet sind.

In der Automobilindustrie werden die Motoren ständig weiter entwickelt. Neben der Verringerung des Verbrauchs und des Schadstoffausstoßes werden auch die Betriebstemperaturen der Motoren weiter optimiert.

Aufgabe der vorliegenden Erfindung ist es deshalb, Speichermedien für verschiedene Temperaturen mit verbesserten Eigenschaften zur Verfügung zu stellen.

Die erfindungsgemäße Aufgabe wird gelöst durch ternäre Salzgemische der allgemeinen Zusammensetzung

ANO₃+ LiNO₃ + Mg(NO₃)₂ · 6 H₂O (I)

mit
- A: K oder Na
zur Speicherung von Wärmeenergie in Form von Phasenumwandlungswärme sowie deren Nutzung in Latentwärmespeichern.

Es wurde gefunden, daß Salzgemische aus Lithiumnitrat, Natriumnitrat und Magnesiumnitrat Hexahydrat in einem definierten Verhältnis gute Speichemiedien für Temperaturen zwischen 65°C und 69°C, insbesondere zwischen 66°C und 68°C, sind. Bei einer Zusammensetzung von 8-14 Masse-%, insbesondere bei 10-12 Masse-%, LiNO₃, 4-10 Masse-%, insbesondere 6-8 Masse-%, NaNO₃ und 78-86 Masse-%, insbesondere 80-84 Masse-%, Mg(NO₃)₂ · 6 H₂O hat das Salzgemisch einen Schmelzpunkt von ca. 67°C.

Überraschend wurde gefunden, daß bei einer Zusammensetzung von 11 Masse-% LiNO₃, 7 Masse-% NaNO₃ und 82 Masse-% Mg(NO₃)₂ · 6 H₂O ein ideales Speichermedium für Temperaturen um 67°C mit einer hohen Schmelzenthalpie vorliegt.

Es wurde gefunden, daß Salzgemische aus Lithiumnitrat, Kaliumnitrat und Magnesiumnitrat Hexahydrat in einem definierten Verhältnis ein gutes Speichermedium für Temperaturen zwischen 50°C und 54°C, insbesondere zwischen 51°C und 53°C, sind. Bei einer Zusammensetzung von 11-18 Masse-%, insbesondere bei 13-16 Masse-%, LiNO₃, 17-23 Masse-%, insbesondere 19-21 Masse-%, KNO₃ und 61-70 Masse-%, insbesondere 63-68 Masse-%, Mg(NO₃)₂ · 6 H₂O hat das Salzgemisch einen Schmelzpunkt von ca. 52°C.

Überraschend wurde gefunden, daß bei einer Zusammensetzung von 14,9 Masse-% LiNO₃, 20,3 Masse-% KNO₃ und 64,8 Masse-% Mg(NO₃)₂ · 6 H₂O ein ideales Speichermedium für Temperaturen um 52°C mit einer hohen Schmelzenthalpie vorliegt.

Den Salzgemischen können zur Verbesserung der Kristallisationseigenschaften Keimbildner, wie z.B. Magnesiumsulfat, Magnesiumoxid oder Magnesiumhydroxid, in Mengen zwischen 0,5 und 2 Masse-% zugesetzt werden.

Die bevorzugten Gemische gemäß der Erfindung enthalten entweder Natriumnitrat oder Kaliumnitrat. Erfindungsgemäß werden aber auch solche Gemische umfaßt, welche sowohl Kalium- als auch Natriumnitrat einschließen.

Die hohen Schmelzenthalpien bedeuten, daß beispielsweise bei vorgegebener Salzmenge mit den erfindungsgemäßen Salzgemischen eine höhere Wärmemenge am Phasenumwandlungspunkt aufgenommen bzw. wieder zur Verfügung gestellt wird. Für einen vorgegebenen Wärmemengenbedarf ist wiederum eine geringere Menge an Salzgemisch erforderlich, so daß entsprechende Wärmespeicher kleiner und leichter gebaut werden können.

Die erfindungsgemäßen Salzgemische können zur Speicherung der Abwärme von Kraftfahrzeugmotoren verwendet werden. Die während des Betriebes abgegebene Wärme kann mit diesen Speichermaterialien latent gespeichert werden. Die gespeicherte Energie kann beim nächsten Start zur Aufheizung des Kraftfahrzeuginnenraums oder zur Erwärmung des Motors genutzt werden.

Ebenso können diese Salzgemische in Latentwärmespeichern für die Brauchwassererhitzung oder für Heizungssysteme genutzt werden.

Gegenstand der Erfindung sind somit Wärmespeicher, welche Verbindungen der Formel (I) enthalten.

## Patentansprüche

1. Ternäre Salzgemische der allgemeinen Zusammensetzung
ANO₃+ LiNO₃ + Mg(NO₃)₂ · 6 H₂O (I)
mit
A K oder Na
zur Speicherung von Wärmeenergie in Form von Phasenumwandlungswärme.

2. Ternäre Salzgemische nach Anspruch 1 worin A Natrium bedeutet, dadurch gekennzeichnet, daß sie aus Gemischen von 10-12 Masse-% Lithiumnitrat, 6-8 Masse-% Natriumnitrat und 80-84 Masse-% Magnesiumnitrat Hexahydrat bestehen.

3. Ternäre Salzgemische nach Anspruch 1 worin A Kalium bedeutet, dadurch gekennzeichnet, daß sie aus Gemischen von 13-16 Masse-% Lithiumnitrat, 19-21 Masse-% Kaliumnitrat und 63-68 Masse-% Magnesiumnitrat Hexahydrat bestehen.

4. Ternäre Salzgemische nach Anspruch 1, dadurch gekennzeichnet, daß sie Keimbildner enthalten.

5. Ternäre Salzgemische nach Anspruch 4, dadurch gekennzeichnet, daß die Keimbildner Magnesiumsulfat, Magnesiumoxid oder Magnesiumhydroxid sind.

6. Ternäre Salzgemische nach Anspruch 4 oder 5, dadurch gekennzeichnet, daß die Keimbildner in 0,5-2 Masse-% enthalten sind.

7. Verwendung von ternären Salzgemischen gemäß der Ansprüche 1 bis 6 als Speichermedium in Latentwärmespeichern.

8. Latentwärmespeicher zur Speicherung und Nutzung von Abwärme enthaltend ein ternäres Salzgemisch nach den Ansprüchen 1 bis 6.

9. Verwendung eines Latentwärmespeichers nach Anspruch 8 in Kraftfahrzeugmotorsystemen.

10. Verwendung eines Latentwärmespeichers nach Anspruch 8 zur Brauchwassererhitzung und für Heizungssysteme.
